# FASCICULE DE BREVET EUROPEEN

(11) **EP 2 018 313 B1**
(45) Date de publication et mention de la délivrance du brevet: **29.09.2010**
(21) Numéro de dépôt: 07731752.7
(22) Date de dépôt: 16.03.2007
(51) Int. Cl.: B62D 27/02, B62D 25/04

(54) **LIAISON ENTRE LA TRAVERSE DE PAVILLON ET LE RENFORT SUPERIEUR DE PIED MILIEU D'UN VEHICULE AUTOMOBILE**
VERBINDUNG ZWISCHEN DEM DACHQUERTRÄGER UND DER OBEREN MITTELSÄULENVERSTÄRKUNG EINES KRAFTFAHRZEUGS
CONNECTION BETWEEN THE ROOF CROSS-MEMBER AND THE UPPER CENTER PILLAR REINFORCEMENT OF A MOTOR VEHICLE

(30) Priorité: 18.05.2006 FR 0651814
(43) Date de publication de la demande: 28.01.2009
(73) Titulaire: RENAULT S.A.S., 92100 Boulogne Billancourt (FR)
(72) Inventeur: DUGUET, Eric, F-75009 Paris (FR); JANOT, Julien, F-92400 Courbevoie (FR)
(86) Numéro de dépôt international: PCT/FR2007/050936
(87) Numéro de publication internationale: WO 2007/135302

(56) Documents cités:
- EP-A1- 1 024 073
- EP-A2- 0 856 455
- DE-A1-102005 043 062

## Description

### Domaine de l'invention

L'invention concerne les véhicules automobiles du type voiture particulière dont la carrosserie possède au moins une traverse de pavillon au niveau du milieu du toit, en jonction avec deux renforts supérieurs de pied milieu, entre deux portières latérales du véhicule.

Elle concerne, plus particulièrement, la résistance mécanique de la carrosserie et indirectement la sécurité du passager du véhicule.

### Art antérieur et problème posé

La carrosserie, ou caisse, des véhicule de type usuel, tels que les berlines, destinés à l'usage des particuliers, comporte généralement, de chaque côté du véhicule, un montant latéral de milieu de caisse, situé entre une porte avant et une porte arrière de la voiture. Cet élément rejoint les éléments de toiture, en particulier une traverse de pavillon et une structure latérale supérieure, situé au-dessus des deux portières, de chaque côté de la voiture, et appelé éventuellement "brancard".

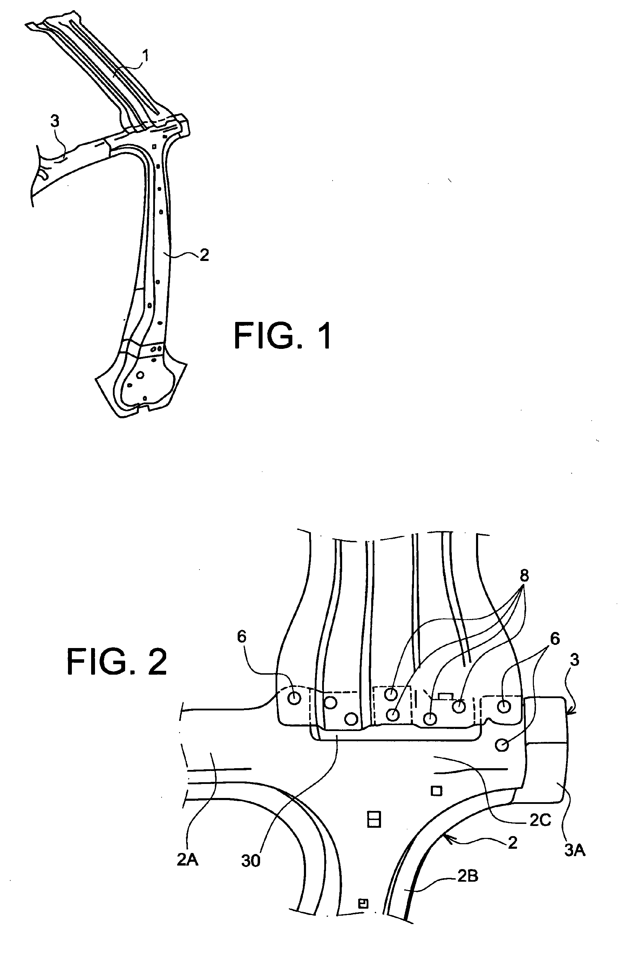

La figure 1 montre ces principaux éléments et leurs jonctions. Ainsi, la traverse de pavillon 1 est donc fixée, d'une part, au montant latéral de la caisse, et plus exactement au renfort supérieur de pied milieu 2, et au brancard 3. De plus, il faut noter la présence, non représentée sur cette figure 1, d'une doublure de montant de baie qui se trouve principalement derrière le renfort supérieur du pied milieu 2 et, en partie, derrière le brancard 3.

L'un des soucis permanents des constructeurs de carrosseries automobiles est de doter celles-ci d'une résistance mécanique aux chocs optimale, notamment, aux chocs latéraux subis par la carrosserie au niveau des montants latéraux, entre les deux portières avant et arrière, d'un même côté du véhicule. Dans cet optique, la liaison de la traverse de pavillon 1 avec chacun des deux pieds latéraux, en particulier les renforts supérieurs de pied milieu qui leur sont associés, est primordiale vis-à-vis de ces caractéristiques de résistance aux chocs latéraux. En effet, ce noeud mécanique doit permettre de faire transiter des efforts importants, environ deux tonnes, du renfort supérieur de pied milieu 2 vers la traverse de pavillon 1, d'où la nécessité d'assurer une qualité de liaison sans faille, notamment concernant les points de soudure. Le noeud mécanique que constitue cette liaison fait donc l'objet de nombreuses recherches de résistance mécanique.

D'autre part, dans la plupart des cas, les matériaux constituants respectivement la traverse de pavillon 1 et le renfort supérieur de pied milieu 2 sont très souvent les mêmes ou sensiblement les mêmes, et par exemple un acier tel que le 22MMB5, c'est-à-dire à haute limite élastique. En effet, ces deux pièces doivent être dotées d'une très haute limite élastique, de l'ordre de 1 200 MPa et doivent être fixées de manière très rigide, par exemple par soudage. Or, les constructeurs automobiles éprouvent beaucoup de difficultés à souder entre elles deux pièces constituées d'un tel acier à très haute limite élastique.

Le document EP-A1-1 024 073 montre une liaison entre une traverse de pavillon et un renfort supérieur de pied milieu de la caisse d'un véhicule automobile, constituée de
- un renfort supérieur de pied milieu placé sensiblement verticalement et latéralement par rapport à la caisse du véhicule;
- une traverse de pavillon placée sensiblement horizontalement et transversalement dans la partie supérieure de la caisse, et étant fixée de façon rigide à la partie supérieure du renfort supérieur de pied de milieu; et
- une doublure de montant de baie,
la liaison étant telle que la fixation de la traverse de pavillon au renfort supérieur de pied milieu est faite, par l'intermédiaire d'une série de premiers points de soudure entre le renfort supérieur de pied milieu et la doublure de montant de baie.

Le but de l'invention est donc de remédier à cet inconvénient, en proposant un type de liaison permettant de fixer ces deux pièces constituées d'un même métal à haute résistance mécanique l'une à l'autre.

### Résumé de l'invention

A cet effet, l'objet principal de l'invention est une liaison entre la traverse de pavillon et le renfort supérieur de pied milieu de la caisse d'un véhicule automobile du type berline, comportant :
- un renfort supérieur de pied milieu placé sensiblement verticalement et latéralement dans la caisse et étant constitué d'un premier matériau déterminé ;
- une traverse de pavillon placée sensiblement horizontalement et transversalement dans la partie supérieure de la caisse, constituée d'un même deuxième matériau déterminé et devant être fixée, à chaque extrémité, à la partie supérieure de chaque renfort supérieur de pied milieu, de manière rigide ; et
- une doublure de montant de baie, placée du côté intérieur du renfort supérieur de pied milieu et étant constitué d'un troisième matériau déterminé.

Selon l'invention, la fixation de la traverse de pavillon sur le renfort supérieur de pied milieu est fait par l'intermédiaire de la doublure de montant de baie, par une série de premiers points de soudure entre la traverse de pavillon et la doublure de montant de baie et par une série de deuxièmes points de soudure entre la doublure de montant de baie et le renfort supérieur de pied milieu.

Dans la réalisation envisagée de l'invention, le premier et le deuxième matériaux déterminés sont des aciers à très haute limite elastique du type analogue au 22MMB5.

Dans cette même réalisation préférentielle de l'invention, le troisième matériau déterminé est un autre acier à haute limite élastique, mais différent des premier et deuxième matériaux déterminés.

Dans la réalisation préférée de la liaison selon l'invention, celle-ci possède une languette destinée à recouvrir partiellement une zone de liaison du renfort supérieur du pied milieu, de manière à être recouverte par la traverse de pavillon.

Dans ce cas, la série de premiers points est située de part et d'autre de la languette, la doublure de montant de baie se trouvant derrière le renfort supérieur de pied milieu.

De préférence, la série de deuxièmes points de soudure est réalisée à l'endroit où la languette recouvre le renfort supérieur du pied milieu.

De préférence, pour permettre à la doublure de montant de baie de pouvoir être insérée par sa languette entre la traverse de pavillon et le renfort supérieur de pied milieu, ce dernier possède un évidement.

### Liste des figures

L'invention et ses différentes caractéristiques techniques seront mieux comprises à la lecture de la description suivante, accompagnée de quatre figures représentant respectivement :
- figure 1, la localisation de la liaison selon l'invention dans une caisse d'automobile ; et
- figure 2, les détails de la liaison selon l'invention ;
- figure 3, la doublure de montant de baie utilisée dans la liaison selon l'invention ; et
- figure 4, l'ensemble des différentes pièces montées dans la liaison selon l'invention.

### Description détaillée d'une réalisation de l'invention

La figure 2 montre en détail le noeud mécanique constitué par la liaison du renfort supérieur de pied milieu 2 avec la traverse de pavillon 1, par l'intermédiaire de la doublure de montant de baie 3.

Le renfort supérieur de pied milieu 2 a été représenté avec une partie horizontale 2A, se prolongeant longitudinalement par rapport à l'axe du véhicule, le long d'un brancard. Sa partie inférieure 2B, sensiblement verticale, s'étend entre les deux portières d'un même coté du véhicule. La liaison de ces deux parties constitue une zone de jonction 2C sur laquelle la liaison avec la traverse de pavillon 1 est réalisée.

Cette traverse de pavillon 1 est représentée de manière à recouvrir une partie supérieure de la zone de jonction 2C des deux parties horizontale 2A et verticale 2B du renfort supérieur de pied milieu 2. D'autre part, la doublure de montant de baie 3 est représentée par une partie latérale droite 3A et est placée sous le renfort supérieur de pied milieu 2 ; ce qui explique le fait qu'elle est très peu représentée sur cette figure 2. Néanmoins, une languette 30 recouvrant une partie supérieure de la zone de jonction 2C et du renfort supérieur de pied milieu 2 dépasse par rapport à l'extrémité de la traverse de pavillon 1. En fait, cette languette 30 est placée entre la traverse du pavillon 1 et le renfort supérieur de pied de milieu 2. Cette languette est donc une partie écartée de la tôle constituant la doublure du montant de baie.

Une série de premiers points de soudure 6, en l'occurrence trois points sur cette figure, est effectuée, de part et d'autre de la languette 30, dans la périphérie de la zone de jonction 2C, entre le la doublure du montant de baie 3 et cette zone de jonction 2C du renfort supérieur de pied milieu 2. Sur cette figure 2, deux de ces premiers points de soudure 6 sont représentés sur la traverse de pavillon 1, mais constituent, en fait, une soudure entre le renfort supérieur de pied de milieu 2 et la doublure de montant de baie 3. En effet, cette dernière se trouve, mise à part la languette 30, derrière le renfort supérieur de pied de milieu 2 et n'est donc pas visible sur cette figure 2. Par contre, deux de ces premiers points de soudure 6 sont recouverts par l'extrémité de la traverse de pavillon 1. Cette série de premiers points 6 assure donc la liaison mécanique entre le renfort supérieur de pied de milieu 2 avec la doublure de montant de baie 3.

Une série de deuxièmes points de soudure 8, en l'occurrence six points sur cette figure 2, est effectuée entre la traverse de pavillon 1 et la doublure de montant de baie 3. Ils se trouvent regroupés à l'endroit où la languette 30 recouvre la partie supérieure de la zone de jonction 2C du renfort supérieur de pied de milieu 2. Ils assurent donc la liaison mécanique entre la traverse de pavillon 1, la doublure de montant de baie 3, et ce renfort supérieur de pied de milieu 2.

Ainsi, on utilise par l'intermédiaire de la doublure de montant de baie 3, et plus particulièrement sa languette 30, une pièce intermédiaire constituée d'un matériau différent du matériau constituant la traverse de pavillon 1 et le renfort supérieur de pied milieu 2 pour faire transiter les efforts par les points de soudure 6 et 8 qui sont de qualité satisfaisante, compte tenu des deux matériaux différents utilisés, à savoir, dans la réalisation préconisée de la liaison selon l'invention, un acier à très haute limite élastique, du type 22MMB5 et un autre acier à haute limite élastique. En effet, la doublure de montant de baie est réalisée dans un autre acier à haute limite élastique, mais sensiblement différent de celui utilisé et constitué de deux autres pièces, de manière à réaliser une soudure efficace.

Ainsi les points de soudure 6 et 8 satisfont à la condition de non rupture en cas de chocs. De plus, le phénomène de "pelage" est limité et ne concerne éventuellement que deux des deuxièmes points de soudure 8. Cette liaison est donc robuste, même dans le cas des chocs latéraux les moins favorables.

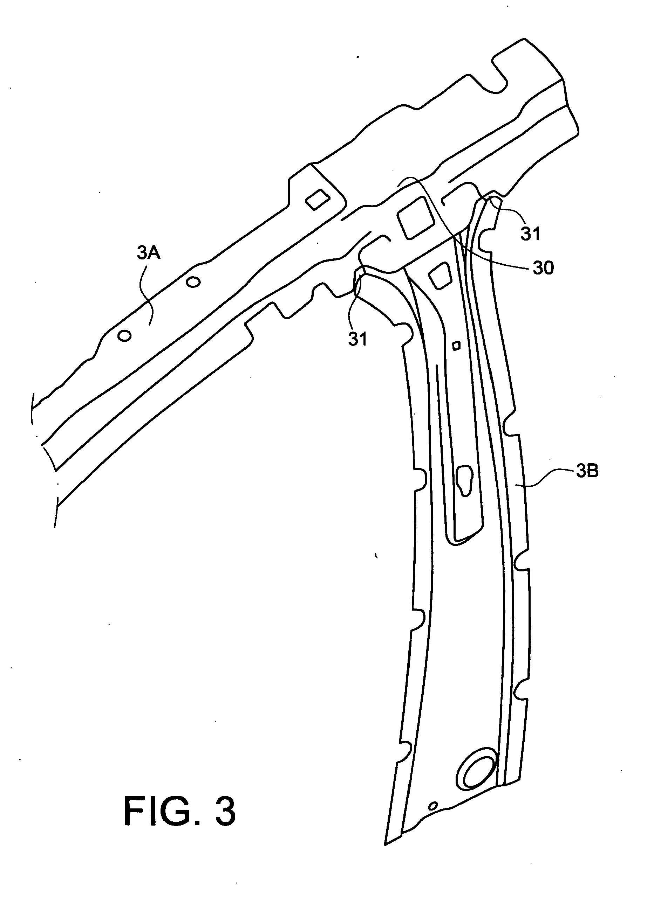

La figure 3 montre en détail la doublure de montant de baie 3 qui est réalisée, dans le mode de réalisation décrit ici, en deux pièces : à savoir, une doublure de montant de baie supérieure et horizontale 3A et une doublure de montant de baie verticale 3B. La doublure de montant de baie supérieur et horizontale 3A se trouve derrière le longeron longitudinal supérieur de base du véhicule, c'est-à-dire le brancard, tandis que la partie verticale 3B se trouve derrière le pied milieu. La partie centrale de la partie horizontale 3A comporte la languette 30 qui constitue une légère proéminence par rapport à la section globale de la partie horizontale 3A de cette doublure de montant de baie horizontale. De cette manière, la languette 30 fait légèrement saillie et permet de recouvrir partiellement le renfort supérieur de pied milieu 2, dans sa zone de jonction, référencée 2C sur la figure 2. On note que le renfort supérieur de pied milieu 2 doit présenter un léger évidemment pour permettre à cette languette de venir se loger par dessus cette zone de jonction. Deux échancrures latérales 31 permettent de constituer la languette 30 dans le profilé général de la partie horizontale 3A de la doublure de montant de baie 3.

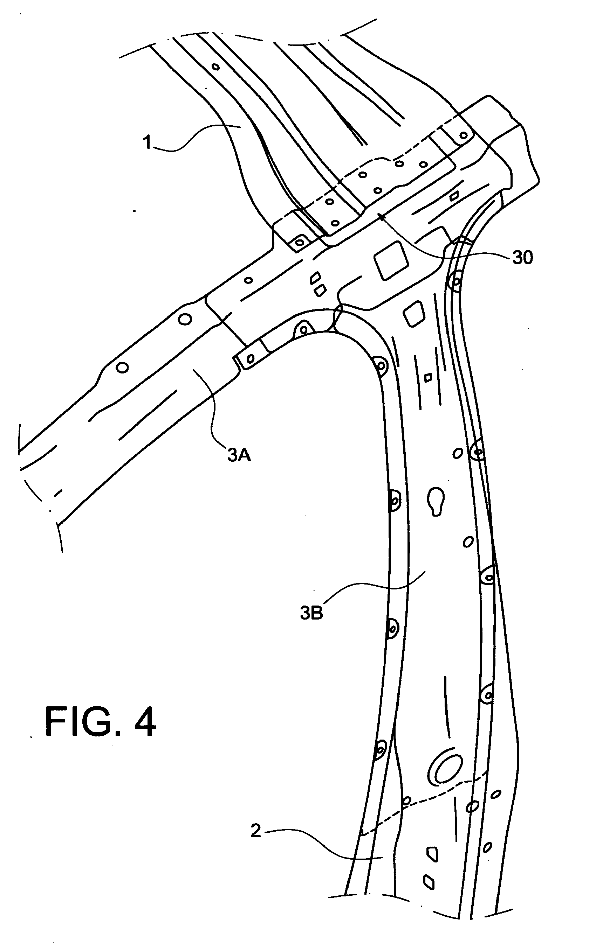

La figure 4 montre l'ensemble de la liaison, une fois réalisée. Sur cette figure 4, la doublure de montant de baie 3, réalisée en fait de sa partie horizontale 3A et de sa partie verticale 3B, est en superposition avec le renfort de pied milieu 2, qui la recouvre, sauf au niveau de la languette 30. La traverse de pavillon 1 recouvre partiellement la zone de jonction 30 du renfort principal du pied de milieu 2.

## Revendications

1. Liaison entre une traverse de pavillon (1) et un renfort supérieur de pied milieu (2) de la caisse d'un véhicule automobile, constituée de :
- un renfort supérieur de pied milieu (2) placé sensiblement verticalement et latéralement par rapport à la caisse du véhicule et constitué d'un premier matériau déterminé ;
- une traverse de pavillon (1) placée sensiblement horizontalement et transversalement dans la partie supérieure de la caisse, constituée d'un deuxième matériau déterminé et étant fixée de façon rigide à la partie supérieure du renfort supérieur de pied de milieu (2) ; et
- une doublure de montant de baie (3) placée du côté intérieur du renfort supérieur de pied milieu (2) et constituée d'un troisième matériau déterminé,
**caractérisée en ce que** la fixation de la traverse de pavillon (1) au renfort supérieur de pied milieu (2) est faite, par l'intermédiaire d'une série de premiers points de soudure (6) entre le renfort supérieur de pied milieu (2) et la doublure de montant de baie (3) et une série de deuxièmes points de soudure (8) entre la doublure de montant de baie (3) et la traverse de pavillon (1).

2. Liaison selon la revendication 1, lorsque le premier et le deuxième matériaux déterminés sont un acier à très haute limite et le deuxième élastique du type 22MMB5.

3. Liaison selon la revendication 2, **caractérisée en ce que** le troisième matériau déterminé et en acier à haute limite élastique différent des premier et deuxième matériaux utilisés.

4. Liaison selon la revendication 3, en ce que la doublure de montant de baie (3) possède une languette (30) destinée à recouvrir partiellement le renfort supérieur de pied de milieu (2) et à être recouverte par l'extrémité de la traverse de pavillon (1).

5. Liaison selon la revendication 4, **caractérisée en ce que** la série de premiers points de soudure (6) est réalisée de part et d'autre de la languette (30), la doublure de montant de baie (3) se trouvant derrière le renfort supérieur de pied milieu (2) pour réaliser la série de deuxièmes points de soudure (8).

6. Liaison selon la revendication 5, **caractérisée en ce que** la série de deuxièmes points de soudure (8) est réalisée à l'endroit où la languette (30) recouvre le renfort supérieur du pied milieu (2).

7. Liaison selon la revendication 4 **caractérisée en ce que** le renfort supérieur de pied milieu (2) possède un évidement pour permettre à la doublure de montant de baie (3), par l'intermédiaire de sa languette (30), de se loger entre le renfort supérieur de pied de milieu (2) et la traverse de pavillon (1).

## Claims

1. Connection between a roof cross-member (1) and a center pillar top brace (2) of the body shell of a motor vehicle, consisting of:
- a center pillar top brace (2) placed substantially vertically and laterally relative to the body shell of the vehicle and consisting of a first determined material;
- a roof cross-member (1) placed substantially horizontally and transversely in the top portion of the body shell, consisting of a second determined material and being attached rigidly to the top portion of the center pillar top brace (2); and
- a window post liner (3) placed on the inside of the center pillar top brace (2) and consisting of a third determined material,
**characterized in that** the fastening of the roof cross-member (1) to the center pillar top brace (2) is carried out by means of a series of first spot welds (6) between the center pillar top brace (2) and the window post liner (3) and a series of second spot welds (8) between the window post liner (3) and the roof cross-member (1).

2. Connection according to Claim 1, when the first and second determined materials are a steel with a very high limit and the second elastic of the 22MMB5 type.

3. Connection according to Claim 2, **characterized in that** the third determined material is in a high limit elastic steel different from the first and second materials used.

4. Connection according to Claim 3, **characterized in that** the window post liner (3) has a tongue (30) designed to partially cover the center pillar top brace (2) and to be covered by the end of the roof cross-member (1).

5. Connection according to Claim 4, **characterized in that** the series of first spot welds (6) is produced on either side of the tongue (30), the window post liner (3) being behind the center pillar top brace (2) in order to produce the series of second spot welds (8).

6. Connection according to Claim 5, **characterized in that** the series of second spot welds (8) is produced in the location where the tongue (30) covers the center pillar top brace (2).

7. Connection according to Claim 4, **characterized in that** the center pillar top brace (2) has a recess to allow the window post liner (3), by means of its tongue (30), to be housed between the center pillar top brace (2) and the roof cross-member (1).

## Patentansprüche

1. Verbindung zwischen einem Dachquerträger (1) und einer oberen Verstärkung der Mittelsäule (2) des Aufbaus eines Kraftfahrzeugs, umfassend:
- eine obere Verstärkung der Mittelsäule (2), die im Wesentlichen vertikal und lateral bezüglich des Aufbaus des Fahrzeugs platziert ist und aus einem ersten bestimmten Material besteht;
- ein Dachquerträger (1), der im Wesentlichen horizontal und quer im oberen Teil des Aufbaus platziert ist, aus einem zweiten bestimmten Material besteht und starr am oberen Teil der oberen Verstärkung der Mittelsäule (2) befestigt ist; und
- eine Fenstersäulenverkleidung (3), die auf der Innenseite der oberen Verstärkung der Mittelsäule (2) platziert ist und aus einem dritten bestimmten Material besteht,
**dadurch gekennzeichnet, dass** die Befestigung des Dachquerträgers (1) an der oberen Verstärkung der Mittelsäule (2) mittels einer Reihe von ersten Schweißpunkten (6) zwischen der oberen Verstärkung der Mittelsäule (2) und der Fenstersäulenverkleidung (3) und einer Reihe von zweiten Schweißpunkten (8) zwischen der Fenstersäulenverkleidung (3) und dem Dachquerträger (1) erfolgt.

2. Verbindung nach Anspruch 1, wobei das erste und das zweite bestimmte Material Stahl mit sehr hoher Grenze sind und das zweite elastisch des Typs 22MMB5.

3. Verbindung nach Anspruch 2, **dadurch gekennzeichnet, dass** das dritte bestimmte Material ein Stahl mit sehr hoher Elastizitätsgrenze ist, das sich von dem ersten und zweiten verwendeten Material unterscheidet.

4. Verbindung nach Anspruch 3, **dadurch gekennzeichnet, dass** die Fenstersäulenverkleidung (3) eine Lasche (30) besitzt, die die obere Verstärkung der Mittelsäule (2) teilweise bedecken soll und von dem Ende des Dachquerträgers (1) bedeckt werden soll.

5. Verbindung nach Anspruch 4, **dadurch gekennzeichnet, dass** die Reihe von ersten Schweißpunkten (6) auf beiden Seiten der Lasche (30) erzeugt ist, wobei sich die Fenstersäulenverkleidung (3) hinter der oberen Verstärkung der Mittelsäule (2) befindet, um die Reihe von zweiten Schweißpunkten (8) zu erzeugen.

6. Verbindung nach Anspruch 5, **dadurch gekennzeichnet, dass** die Reihe von zweiten Schweißpunkten (8) an der Stelle erzeugt ist, wo die Lasche (30) die obere Verstärkung der Mittelsäule (2) bedeckt.

7. Verbindung nach Anspruch 4, **dadurch gekennzeichnet, dass** die obere Verstärkung der Mittelsäule (2) eine Aussparung besitzt, damit die Fenstersäulenverkleidung (3) mittels ihrer Lasche (30) zwischen der oberen Verstärkung der Mittelsäule (2) und dem Dachquerträger (1) aufgenommen werden kann.
